(19) Europäisches Patentamt / European Patent Office / Office européen des brevets

(11) **EP 3 499 774 B1**

(12) **EUROPEAN PATENT SPECIFICATION**

(45) Date of publication and mention of the grant of the patent:
**14.10.2020 Bulletin 2020/42**

(21) Application number: **17838515.9**

(22) Date of filing: **17.07.2017**

(51) Int Cl.:
*H04L 5/00* *(2006.01)*

(86) International application number:
**PCT/CN2017/093182**

(87) International publication number:
**WO 2018/028385 (15.02.2018 Gazette 2018/07)**

(54) **METHOD AND APPARATUS FOR CHANNEL RESOURCE DETERMINING AND RESOURCE MAPPING**

VERFAHREN UND VORRICHTUNG ZUR KANALRESSOURCENBESTIMMUNG UND RESSOURCENABBILDUNG

PROCÉDÉ ET APPAREIL DE DÉTERMINATION DE RESSOURCES DE CANAL, ET MAPPAGE DE RESSOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2016 CN 201610649138**

(43) Date of publication of application:
**19.06.2019 Bulletin 2019/25**

(73) Proprietor: **China Academy of Telecommunications Technology**
**Haidian District**
**Beijing 100191 (CN)**

(72) Inventors:
• **WANG, Lei**
**Beijing 100191 (CN)**
• **PAN, Xueming**
**Beijing 100191 (CN)**

(74) Representative: **Nony**
**11 rue Saint-Georges**
**75009 Paris (FR)**

(56) References cited:
**CN-A- 102 149 049      CN-A- 103 477 695**
**US-A1- 2014 328 260**

• **INTERDIGITAL: "Consideration on sPDCCH Design", 3GPP DRAFT; R1-165049_SPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096680, Retrieved from the Internet: URL:http://www.3gpp.org/ftp/tsg_ran/WG1_RL 1/TSGR1_85/Docs/ [retrieved on 2016-05-13]**
• **LENOVO: "Design of DL channels for shortened TTI", 3GPP DRAFT; R1-164649, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096871, Retrieved from the Internet: URL:http://www.3gpp.org/ftp/tsg_ran/WG1_RL 1/TSGR1_85/Docs/ [retrieved on 2016-05-13]**
• **ERICSSON: "Physical design aspects of sPDCCH", 3GPP DRAFT; R1-165292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, P.R. China; 20160523 - 20160527 13 May 2016 (2016-05-13), XP051096744, Retrieved from the Internet: URL:http://www.3gpp.org/ftp/tsg_ran/WG1_RL 1/TSGR1_85/Docs/ [retrieved on 2016-05-13]**

- **NTT DOCOMO ET AL: "sPDCCH for shortened TTI", 3GPP DRAFT; R1-165209, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing; 20160523 - 20160527 15 May 2016 (2016-05-15), XP051096136, Retrieved from the Internet: URL:http://www.3gpp.org/ftp/tsg_ran/WG1_RL 1/TSGR1_85/Docs/ [retrieved on 2016-05-15]**

**Description**

**Field**

The present invention relates to the field of communications, and particularly to a method and apparatus for determining a channel resource, and a method and apparatus for mapping to a resource.

**Background**

With the development of the mobile technologies, future mobile communication systems need to provide a shorter network delay, and support a more diversity of service types. A short Transmission Time Interval (TTI) tends not to occupy the entire system bandwidth in the frequency domain, so a control region thereof can only be limited to some sub-band in the system bandwidth. The short TTI refers to a transmission time interval of less than 1ms. However there has been absent so far a solution of how to determine a transmission bandwidth of a control channel with a short TTI.

The mobile Internet is toppling over the legacy mobile communication service mode, providing its subscribers with an unprecedented user experience, and profoundly affecting numerous aspects of our working and living. The mobile Internet will promote further upgrading of information exchanging modes in our society, and provide the subscribers with a more diversity of service experiences including augmented reality, virtual reality, ultra-high-definition (3D) videos, a mobile cloud, etc. Further development of the mobile Internet will bring future mobile traffic expected to grow by a factor of more than a thousand, and promote a new revolution of the mobile communication technologies and industries. The Internet of Things extends a service range of mobile communication from human-to-human communication to intelligent human-to-thing and thing-to-thing interconnectivity so that the mobile communication technologies are pervading more industries and fields. In future, mobile medical care, the Internet of Vehicles, intelligent home appliances, industry control, environmental monitoring, etc., will promote explosive growing of applications over the Internet of Things, and hundreds of billions of devices will access the network so that "all the things will be interconnected" indeed. A vast number of devices to be connected, and a diversity of services over the Internet of Things will also bring a new technical challenge to mobile communication.

As more and more new service demands are emerging constantly, a higher performance demand, e.g., a higher peak rate, a higher user experience rate, a shorter delay, high reliability, high spectrum efficiency, high energy consumption efficiency, etc., is proposed for the future mobile communication systems, and it is desirable to support a larger number of accessing subscribers, and to offer various service types. In order to support a vast number of terminals to be connected, and different service types, a flexible configuration of uplink and downlink resources is expected to be a great technological development trend. Future system resources can be divided into different sub-bands according to different services, and the sub-bands can be divided into TTIs with different lengths to satisfy various service demands.

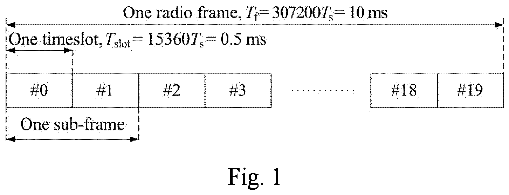

The Frame Structure Type 1 (FS1) is applicable to the existing Long Term Evolution (LTE) Frequency Division Duplex (FDD) system, and Fig.1 illustrates a structural diagram thereof. In the FDD system, there are different carrier frequencies for uplink and downlink transmission, and the same frame structure for uplink and downlink transmission. On each carrier, a radio frame with the length of 10ms includes ten 1ms sub-frames, and each sub-frame includes two timeslots with the length of 0.5ms. The time length of a TTI in uplink and downlink data transmission is 1ms.

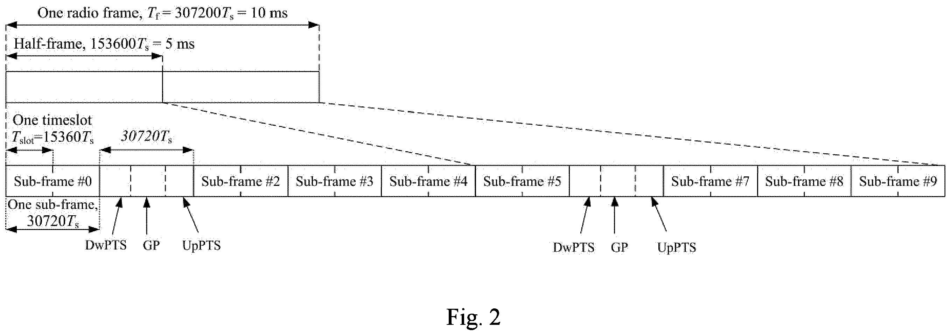

The Frame Structure Type 2 (FS2) as illustrated in Fig.2 is applicable to the existing LTE Time Division Duplex (TDD) system. In the TDD system, there are different sub-frames or different timeslots, on the same frequency, for uplink and downlink transmission. In the FS2, each 10ms radio frame includes two 5ms half-frames, and each half-frame includes five sub-frames with the length of 1ms. The sub-frames in the FS2 are categorized into three categories: downlink sub-frames, uplink sub-frames, and special sub-frames. Each special sub-frame includes three components, i.e., a Downlink Pilot Time Slot (DwPTS), a Guard Period (GP), and an Uplink Pilot Time Slot (UpPTS), where a downlink pilot, downlink service data, and downlink control signaling can be transmitted in the DwPTS; no signal is transmitted in the GP; and only a random access and a Sounding Reference Symbol (SRS), but neither uplink service data nor uplink control information can be transmitted in the UpPTS. Each half-frame includes at least one downlink sub-frame, at least one uplink sub-frame, and at most one special sub-frame. Table 1 depicts seven uplink-downlink sub-frame configuration modes supported in the FS2.

Table 1: Uplink-downlink sub-frame configurations

| Uplink-downlink configuration | Downlink-to- Uplink Switch-point periodicity | Sub-frame number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |

(continued)

| Uplink-downlink configuration | Downlink-to- Uplink Switch-point periodicity | Sub-frame number | | | | | | | | | |
|---|---|---|---|---|---|---|---|---|---|---|---|
| | | 0 | 1 | 2 | 3 | 4 | 5 | 6 | 7 | 8 | 9 |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

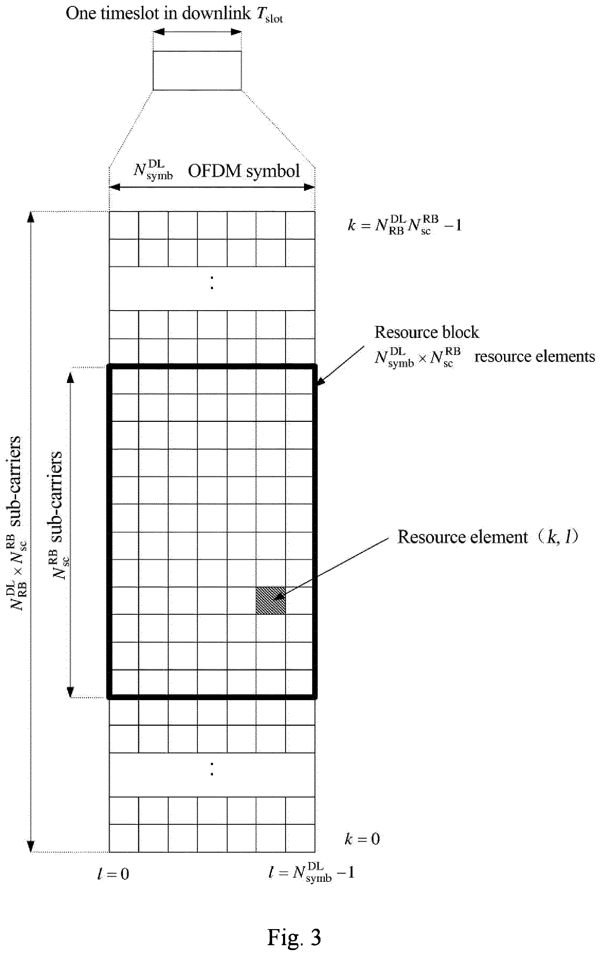

In the LTE system, referring to Fig.3, the smallest resource granularity in the time domain is an Orthogonal Frequency Division Multiplex (OFDM) symbol, and the smallest resource granularity in the frequency domain is a sub-carrier. $(k,l)$ is the index of a Resource Element (RE), where $k = 0,...,N_{RB}^{DL}N_{sc}^{RB} - 1$, and $l = 0,...,N_{symb}^{DL} - 1$. A Physical Resource Block (PB) is a resource element in a higher dimension, which includes $N_{symb}^{DL} \times N_{sc}^{RB}$ REs. There is a PRB pair in a sub-frame, and the PRB pair is an elementary unit for allocating a data resource.

Scheduling information and other control information is carried on a Physical Downlink Control Channel (PDCCH) in the LTE system. A control region of each downlink sub-frame can include a plurality of PDCCHs, and the size of the control region is determined by a Physical Control Format Indicator Channel (PCFICH) using one to four OFDM symbols. A control channel is transmitted in a Control Channel Element (CCE) or a plurality of consecutive CCEs, each CCE includes nine Resource Element Groups (REGs), and REGs in a CCE of a PDCCH are REGs on which neither a PCFICH nor a Physical Hybrid ARQ Indicator Channel (PHICH) is carried. A PDCCH supports a number of formats to satisfy different demands.

In order to extend a capacity of PDCCHs, an Enhanced Physical Downlink Control Channel (EPDCCH) is introduced to the release 11 (Rel-11). EPDCCHs are transmitted in a data region of a sub-frame instead of a transmission space of PDCCHs. Like a PDCCH, the concepts of an Enhanced Resource Element Group (EREG) and an Enhanced Control Channel Element (ECCE) are further introduced in the prior art.

A set of aggregation levels supported by an EPDCCH set has been defined in the existing standard dependent upon the type of the EPDCCH set, a sub-frame type, the number of REs, for transmitting an EPDCCH, in a PRB pair, etc.

In the existing LTE system, the length of a TTI is fixed at 1ms, one or more PDCCHs or EPDCCHs are transmitted in the first N OFDM symbols of each TTI, or a group of PRB pairs in a data region, and a User Equipment (UE) detects blindly a Common Search Space (CSS) or a UE-specific Search Space (USS) for its PDCCH or EPDCCH according to desirable information. For the PDCCHs, their resources are distributed throughout a system bandwidth. When frequency resources in a short TTI are only a subset of the system bandwidth, a control channel of the short TTI, designed for a PDCCH, can not be mapped to any resource if the bandwidth of the short TTI is not determined.

In summary, there has been absent so far in the prior art a solution to mapping to a resource in a short TTI, and determining a corresponding channel resource.

INTERDIGITAL: "Consideration on sPDCCH Design", 3GPP DRAFT; R1-165049_SPDCCH; discloses: Proposal-1: sTTI resources for sPDCCH reception in a subframe is semi-statically configured. Given that an eNB scheduler may know the use of sTTI resource in a subframe from the beginning, the presence of sTTI resource in the subframe can be indicated in each subframe (e.g., in the legacy PDCCH region), therefore a UE may skip monitoring sPDCCH decoding candidates in the subframe. Proposal-2: the presence of sTTI resource in a subframe can be dynamically indicated. An sPDCCH region can be configured at the first one or more OFDM symbols within a sTTI as silimar to legacy PDCCH configuration.

LENOVO: "Design of DL channels for shortened TTI", 3GPP DRAFT; R1-164649, discloses that the time-frequency resource for sPDCCH is configured by higher layer signaling on either UE specific or cell specific basis. sPDCCH search space needs to be defined in order for the UE to properly detect the DL control information.

ERICSSON: "Physical design aspects of sPDCCH", 3GPP DRAFT; R1-165292 discloses that: sPDCCH needs to be introduced for short TTI; and each short TTI on DL may contain sPDCCH decoding candidates. Proposals: The size of the sPDCCH region is configured by RRC or fixed in specification.

NTT DOCOMO ET AL: "sPDCCH for shortened TTI", 3GPP DRAFT; R1-165209 discloses that: The sPDCCH can be designed such that it is placed at the beginning of each-short so that UE can process it at the earliest timing of the given short-TTI. This approach is highly related to two-level DCI. If the first-level (i.e., slow) DCI indicates the information regarding the frequency-position of the second-level (i.e., fast) DCI, UE can recognize where the second-level DCI could be mapped. This indication can be per subframe.

## Summary

The invention is defined and limited by the scope of appended claims. In the following description, any embodiment(s) referred to and not falling within the scope of the appended claims, is (are) merely example(s) useful to the understanding of the invention.

Embodiments of the invention provide a method and apparatus for determining a channel resource, and a method and apparatus for mapping to a resource, so that a user equipment can determine the resource position for a control channel of the user equipment in a bandwidth of a control region of a short TTI.

An embodiment of the invention provides a method for determining a channel resource, applied to a Long Term Evolution, LTE, system. The method includes:

> determining, by a user equipment, a resource set for a control region of a short Transmission Time Interval (TTI); and
> determining, by the user equipment, a set of resources for a control channel of the user equipment in the resource set;
> wherein determining, by the user equipment, the resource set for the control region of the short transmission time interval comprises:

>> obtaining, by the user equipment, the resource set for the control region of the short transmission time interval of the user equipment through higher-layer signaling, wherein the resource set for the control region of each short transmission time interval in a sub-frame is obtained through the high-layer signaling separately and the position, in the frequency domain, of the control region of each short transmission time interval in the sub-frame is different;
>> or

>> obtaining, by the user equipment, the resource set for the control region of the short transmission time interval according to bit information carried in a legacy control region, wherein the resource set for the control region of each short transmission time interval in a sub-frame is obtained through bit information, carried in the legacy control region located in the sub-frame, separately and the position, in the frequency domain, of the control region of each short transmission time interval in the sub-frame is different.

With this method, the user equipment determines the resource set for the control region of the short TTI, and determines the set of resources for the control channel of the user equipment in the resource set, so that the user equipment can determine the resources for the control channel of the user equipment in the resource set for the control region of the short TTI.

Optionally the method further includes: detecting, by the user equipment, blindly the control channel of the user equipment in the set of resources for the control channel of the user equipment.

Correspondingly an embodiment of the invention provides a method for mapping to a resource at the base station side, a Long Term Evolution, LTE, system, the method including:

> determining, by a base station, a resource set for a control region of a short Transmission Time Interval (TTI) of a user equipment;
> mapping, by the base station, a control channel of a short TTI of the user equipment to a set of resources within the resource set; and
> notifying, by the base station, the user equipment of the resource set;
> wherein, notifying, by the base station, the user equipment of the resource set comprises:

>> notifying, by the base station, the user equipment of the resource set for the control region of the short transmission time interval of the user equipment through higher-layer signaling, wherein the resource set for the control region of each short transmission time interval in a sub-frame is notified through the high-layer signaling separately and the position, in the frequency domain, of the control region of each short transmission time interval in the sub-frame is different;
>> or

>> notifying, by the base station, the user equipment of the resource set for the control region of the short transmission time interval of the user equipment through bit information carried in the legacy control region, wherein the resource set for the control region of each short transmission time interval in a sub-frame is notified through bit information, carried in the legacy control region located in the sub-frame, separately and the position, in the frequency domain, of the control region of each short transmission time interval in the sub-frame is different.

With this method, the base station determines the resource set for the control region of the short Transmission Time Interval (TTI) of the user equipment, and the base station maps the control channel of a short TTI of the user equipment to a set of resources within the resource set, so that in the case that the user equipment determines the resource set for a control region of a short TTI, the user equipment can determine the resources for a control channel of the user equipment in the resource set for a control region of a short TTI.

Optionally the resource set for a control region of a short TTI includes N resource block groups or P resource blocks in the frequency domain in the short TTI, and each resource block group includes M resource blocks, wherein N, P, and M are positive integers.

Optionally the N resource block groups are consecutive or discrete, or the P resource blocks are consecutive or discrete.

In correspondence to the method above at the user equipment side, an embodiment of the invention provides a first apparatus for determining a channel resource, a Long Term Evolution, LTE, system, the apparatus including:

a first determining unit configured to determine a resource set for a control region of a short Transmission Time Interval (TTI); and
a second determining unit configured to determine a set of resources for a control channel of the user equipment in the resource set;
wherein the first determining unit is configured:

to obtain the resource set for the control region of the short transmission time interval of the user equipment through higher-layer signaling, wherein the resource set for the control region of each short transmission interval in a sub-frame is obtained through the high-layer signaling separately and the position, in the frequency domain, of the control region of each short transmission time interval in the sub-frame is different; or
to obtain the resource set for the control region of the short transmission time interval of the user equipment according to bit information carried in a legacy control region, , wherein the resource set for the control region of each short transmission time interval in a sub-frame is obtained through bit information, carried in the legacy control region located in the sub-frame, separately and the position, in the frequency domain, of the control region of each short transmission time interval in the sub-frame is different.

Optionally the second determining unit is further configured: to detect blindly the control channel of the user equipment in the set of resources for the control channel of the user equipment.

In correspondence to the method above at the base station side, an embodiment of the invention provides a first apparatus for mapping to a resource, a Long Term Evolution, LTE, system, the apparatus including:

a first unit configured to determine a resource set for a control region of a short Transmission Time Interval (TTI) of a user equipment; and
a second unit configured to map a control channel of a short TTI of the user equipment to a set of resources within the resource set;
wherein the first unit is further configured to notify the user equipment of the resource set;
wherein the first unit is configured:

to notify the user equipment of the resource set for the control region of the short TTI of the user equipment through higher-layer signaling, wherein the resource set for the control region of each short transmission time interval in a sub-frame is notified through the high-layer signaling separately and the position, in the frequency domain, of the control region of each short transmission time interval in the sub-frame is different; or
to notify the user equipment of the resource set for the control region of the short TTI of the user equipment through bit information carried in the legacy control region, wherein the resource set for the control region of each short transmission time interval in a sub-frame is notified through bit information, carried in the legacy control region in the sub-frame, separately and the position, in the frequency domain, of the control region of each short transmission time interval in the sub-frame is different.

**Brief Description of the Drawings**

In order to make the technical solutions according to the embodiments of the invention more apparent, the drawings to which reference is to be made in the description of the embodiments will be introduced below in brief, and apparently the drawings to be described below are only some embodiments of the invention, and based upon these drawings, other drawings can occur to those ordinarily skilled in the art without any inventive effort.

Fig.1 is a schematic diagram of the Frame Structure Type 1 in the prior art;
Fig.2 is a schematic diagram of the Frame Structure Type 2 (for the 5ms switch-point periodicity) in the prior art;
Fig.3 is a schematic diagram of a downlink resource grid in the prior art;
Fig.4 is a schematic flow chart of a method for determining a channel resource according to an embodiment of the invention;
Fig.5 is a schematic flow chart of a method for mapping to a resource according to an embodiment of the invention;
Fig.6(a) and Fig.6(b) are schematic diagrams of a method for determining a transmission resource set for a control channel of a short TTI according to an embodiment of the invention;
Fig.7(a), Fig.7(b), and Fig.7(c) are schematic diagrams of mapping a control channel of a short TTI to a set of resources in a control region according to an embodiment of the invention;
Fig.8(a) and Fig.8(b) are schematic diagrams of a method for determining a transmission resource set for a control channel of a short TTI according to an embodiment of the invention;
Fig.9 is a schematic structural diagram of a first apparatus for determining a channel resource according to an embodiment of the invention;
Fig. 10 is a schematic structural diagram of a first apparatus for mapping to a resource according to an embodiment of the invention;
Fig.11 is a schematic structural diagram of a second apparatus for determining a channel resource according to an embodiment of the invention; and
Fig.12 is a schematic structural diagram of a second apparatus for mapping to a resource according to an embodiment of the invention.

## Detailed Description

Embodiments of the invention provide a method and apparatus for determining a channel resource, and a method and apparatus for mapping to a resource, so that a user equipment can determine the resource for a control channel of the user equipment in a resource set for a control region of a short TTI.

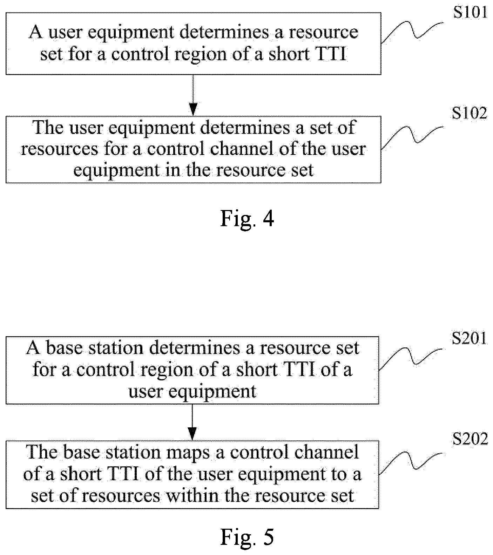

Referring to Fig.4, a method for determining a channel resource at the user equipment side according to an embodiment of the invention includes the following steps.

In the step S101, a user equipment determines a resource set for a control region of a short Transmission Time Interval (TTI).

In the step S102, the user equipment determines a set of resources for a control channel of the user equipment in the resource set.

With this method, the user equipment determines the resource set for a control region of a short TTI, and determines a set of resources for a control channel of the user equipment in the resource set, so that the user equipment can determine the resources for a control channel of the user equipment in the resource set for the control region of the short TTI.

Here the resource set for the control region of the short TTI in the embodiment of the invention is also referred to as a bandwidth of a control region of a short TTI.

Optionally the user equipment determines the resource set for a control region of a short TTI particularly as follows.

The user equipment obtains the resource set for a control region of a short TTI through higher-layer signaling; or the user equipment obtains the resource set for a control region of a short TTI according to information carried in a legacy control region; or the user equipment obtains the resource set for a control region of a short TTI as agreed on in advance with the network side.

Optionally the user equipment detects blindly the control channel of the user equipment in the set of resources for a control channel of the user equipment.

Correspondingly referring to Fig.5, a method for mapping to a resource according to an embodiment of the invention includes the following steps.

In the step S201, a base station determines a resource set for a control region of a short Transmission Time Interval (TTI) of a user equipment.

In the step S202, the base station maps a control channel of a short TTI of the user equipment to a set of resources within the resource set.

With this method, the base station determines the resource set for a control region of a short Transmission Time Interval (TTI) of a user equipment, and the base station maps a control channel of a short TTI of the user equipment to resources within the resource set, so that in the case that the user equipment determines the resource set for a control region of a short TTI, the user equipment can determine the resources for a control channel of the user equipment in the resource set for a control region of a short TTI.

Optionally the base station notifies the user equipment of the resource set so that the user equipment can determine the resource set for a control region of a short Transmission Time Interval (TTI), and further determine the set of resources for a control channel of the user equipment in the resource set.

Optionally the base station notifies the user equipment of the resource set particularly as follows.

The base station notifies the user equipment of the resource set for a control region of a short TTI of the user equipment through higher-layer signaling; or the base station notifies the user equipment of the resource set for a control region of a short TTI of the user equipment in a sub-frame through information carried in the legacy control region in the same sub-frame.

Optionally when the base station notifies the user equipment of the resource set for a control region of a short TTI of the user equipment through the higher-layer signaling, it is notified through the higher-layer signaling that control regions of all the short TTIs in a sub-frame lie in the same resource set; or the resource set for a control region of each short TTI in a sub-frame is notified through the higher-layer signaling separately.

Optionally when the base station notifies the user equipment of the resource set for a control region of a short TTI of the user equipment in the sub-frame through the information carried in the legacy control region in the same sub-frame, the resource set for control regions across all short TTIs in the sub-frame is uniform and notified by the information; or the resource set for control region of each short TTI in the sub-frame is notified respectively through the information in the legacy control region in the same sub-frame.

Stated otherwise, the base station carries the information about the resource set(s) for the control regions in the short TTIs in the sub-frame, in the legacy control region.

The information is sub-frame-common, that is, the resource set for the control regions across all short TTIs in the sub-frame is uniform and notified by the information.

Or, the information is sTTI-specific, that is, the base station notifies the resource set for the control regions of each short TTI in the sub-frame respectively using some number of bits in the legacy control region.

Optionally the resource set for a control region of a short TTI includes N Resource Block (RB) groups or P Resource Blocks (RBs) in the frequency domain in the short TTI, and each resource block group includes M resource blocks, where N, P, and M are positive integers.

Optionally the N resource block groups are consecutive or discrete, or the P resource blocks are consecutive or discrete.

Stated otherwise, the N RB groups or the P RBs can be N consecutive RB groups or P consecutive RBs, or can be N discrete RB groups or P discrete RBs.

Several specific embodiments will be described below.

First example

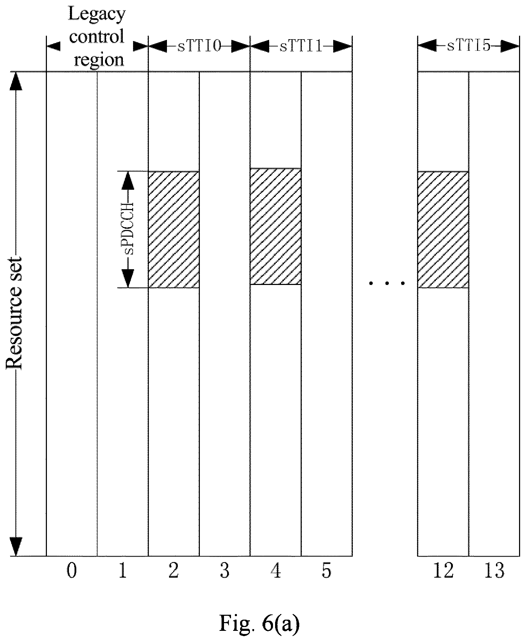

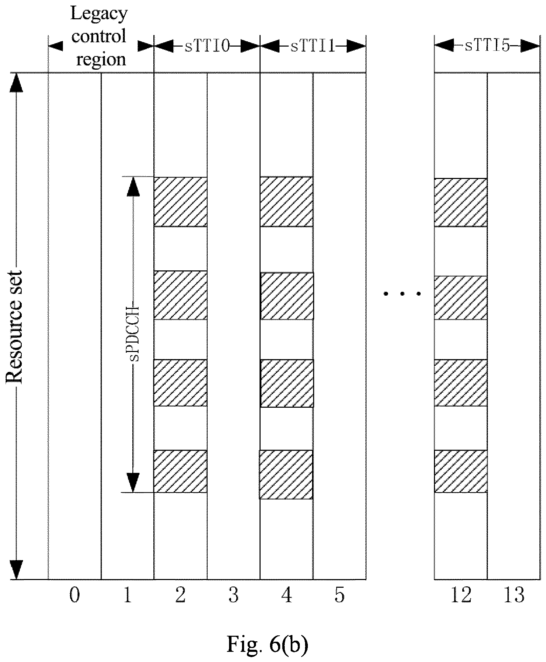

In this example, the length of a short TTI in the time domain is two OFDM symbols, and a legacy control region in an LTE system occupies two OFDM symbols, so there are six short TTIs in a sub-frame, which are sTTI0, sTTI1, sTTI2, sTTI3, sTTI4, and sTTI5 respectively, where an sTTI represents a short TTI. For example, a control region of each short TTI is located in the first OFDM symbol. The same resource set is used for control regions of all the short TTIs in a sub-frame, and a base station notifies a UE of the resource set for the control regions of all short TTIs in the sub-frame through higher-layer signaling, and for example, it is indicated through the higher-layering signaling that a control region of a short TTI is N RBs in a system resource set, where N is a positive integer more than or equal to 1. Here the N RBs can be N consecutive RBs as illustrated in Fig.6(a), or the N RBs can be N discrete RBs as illustrated in Fig.6(b).

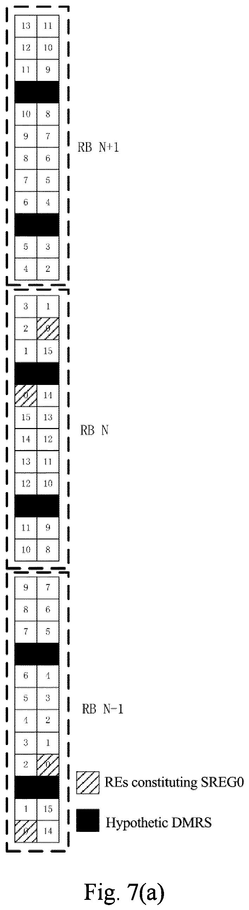

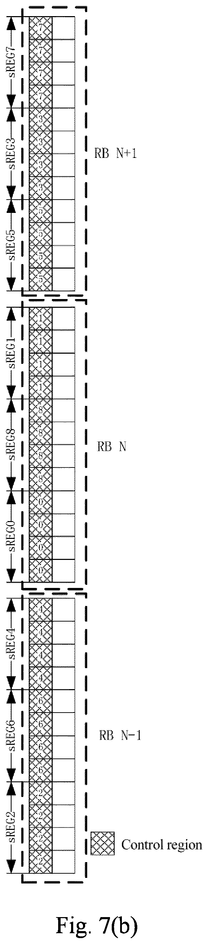

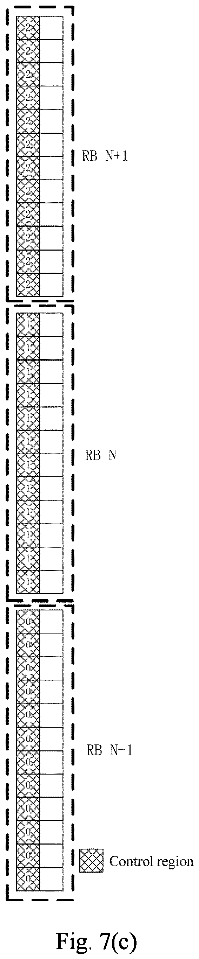

The base station determines available resources in an allocated sPDCCH (i.e., PDCCH corresponding to a short TTI) resource set, and maps control information for scheduling data transmission in the short TTI onto specific resource(s) in the sPDCCH resource set. For example, there are three RBs in a downlink control region of the short TTI, so a control channel of a short TTI can be mapped to a set of resources in the downlink control region as illustrated in Fig.7(a), Fig.7(b), and Fig.7(c). As illustrated in Fig.7(b), for example, bit information to be carried in the sPDCCHs is concatenated, scrambled, modulated, layer-mapped, and pre-coded into information symbols, the information symbols are divided into quadruples, and the quadruples are interleaved. The interleaved quadruples are mapped onto the resources in the control region of the short TTI. For example, there is only one sCCE (the CCE corresponding to the short TTI) in the control region, and the sCCE includes nine sREGs, so the sREGs in the sCCE can be mapped in the control region in the short TTI as illustrated in Fig.7(b). Or the sPDCCHs can be mapped in the resource set in the control region in the same way as EPDCCHs, and in this way, the sCCE includes a plurality of sREGs as illustrated in Fig.7(a). Or the resource is mapped in the unit of RB, downlink control information is mapped to the RBs occupied by the control channel in a firstly frequency-domain and then time-domain or firstly time-domain and then frequency-domain (only frequency-domain when the control region of the short TTI occupies only one OFDM) order as illustrated in Fig.7(a) and Fig.7(c). The UE detects blindly its sPDCCH in a search space allocated for the UE in the resource set for the control region. The UE obtains its scheduling information as a result of de-interleaving, demodulation, and other operations upon reception of the sPDCCH of the UE using a Radio Network Temporary Identifier (RNTI).

Furthermore Fig.6(a) and Fig.6(b) illustrate a possible position example that the resource set for the control region of the short TTI is located in the frequency domain in the short TTI, but the control region can alternatively be located in other position in the frequency domain in the short TTI, or can occupy more than one OFDM symbol. The resource set for the control region of the short TTI may alternatively be notified through the higher-layer signaling as per RB group.

Second Embodiment

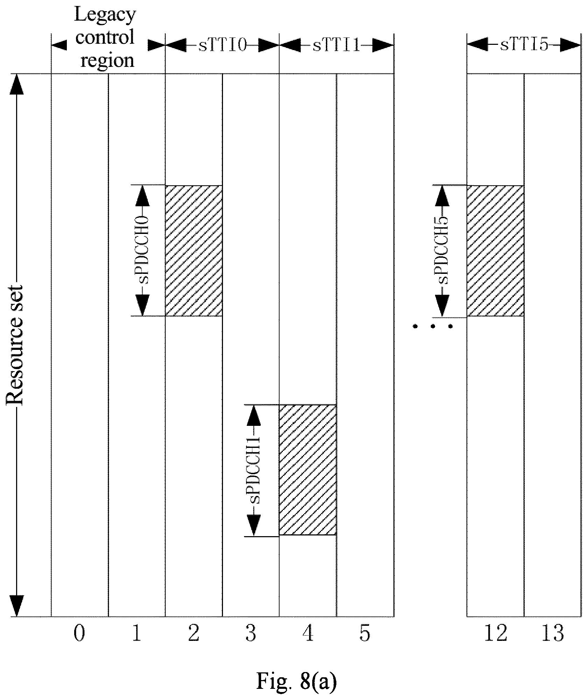

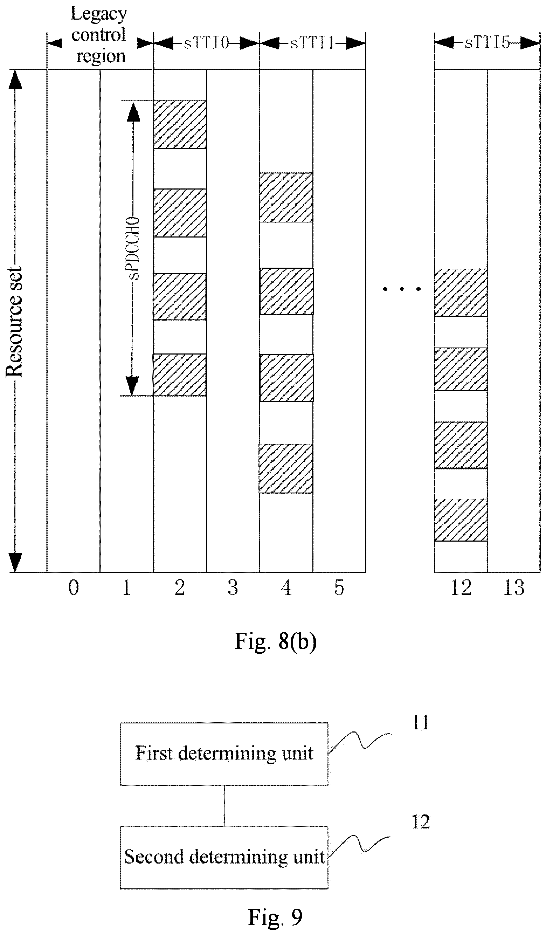

In this embodiment, for example, the length of a short TTI in the time domain is two OFDM symbols, and a legacy control region in an LTE system occupies two OFDM symbols, so there are six short TTIs in a sub-frame, which are sTTI0, sTTI1, sTTI2, sTTI3, sTTI4, and sTTI5 respectively. For example, a control region of each short TTI is located in the first OFDM symbol. Information about resource set for control region of each short TTI in the sub-frame is configured separately via higher-layer signaling, and the position, in the frequency domain, of the control region of each short TTI in a resource set for the short TTIs may or may not be the same. For example, the high-layer signaling indicates N RBs, in a system resource set, occupied by a control region of each short TTI, where N is a positive integer more than or equal to 1. Here the N RBs can be N consecutive RBs as illustrated in Fig. 8(a), or the N RBs can be N discrete RBs as illustrated in Fig.8(b); and the positions, in the frequency domain, of the control regions of the respective short TTIs, in the resource set for the short TTIs may or may not be the same as illustrated in Fig.8(a) and Fig.8(b).

The base station determines available resources in an allocated sPDCCH set, and maps control information for scheduling data transmission in the short TTI onto specific resource(s) in the sPDCCH resource set. For example, there are three RBs in a downlink control region of the short TTI, so a control channel of a short TTI can be mapped to a set of resources in the downlink control region as illustrated in Fig.7(a), Fig.7(b), and Fig.7(c). As illustrated in Fig.7(b), for example, bit information to be carried in the sPDCCHs is concatenated, scrambled, modulated, layer-mapped, and pre-coded into information symbols, the information symbols are divided into quadruples, and the quadruples are interleaved. The interleaved quadruples are mapped onto the resources in the control region of the short TTI. For example, there is only one sCCE in the control region, and the sCCE includes 9 sREGs, so the sREGs in the sCCE can be mapped in the control region of the short TTI as illustrated in Fig.7(b); or the sPDCCHs can be mapped in the resource set in the control region in the same way as EPDCCHs, and in this way, the sCCE includes a plurality of sREGs as illustrated in Fig.7(a); or the resource is mapped in the unit of RB, downlink control information is mapped to the RBs occupied by the control channel in a firstly frequency-domain and then time-domain or firstly time-domain and then frequency-domain (only frequency-domain when the control region of the short TTI occupies only one OFDM) order as illustrated in Fig.7(a) and Fig.7(c). The UE detects blindly its sPDCCH in a search space allocated for the UE in the resource set for the control region. The UE obtains its scheduling information as a result of de-interleaving, demodulation, and other operations upon reception of the sPDCCH of the UE using an RNTI.

Furthermore Fig.6(a) and Fig.6(b) illustrate a possible position example that the resource set for the control region of the short TTI is located in the frequency domain in the short TTI, but the control region can alternatively be located in other position in the frequency domain, or can occupy more than one OFDM symbol. The resource set for the control region of the short TTI may alternatively be notified via the higher-layer signaling as per RB group.

Third Embodiment

In this embodiment, for example, the length of a short TTI in the time domain is two or seven OFDM symbols, and a legacy control region in an LTE system occupies two OFDM symbols. For example, in each short TTI, a control region of a short TTI with the length of two OFDM symbols is located in the first OFDM symbol, and a control region of a short TTI with the length of seven OFDM symbols is located in the first and second OFDM symbols. When frequency resource, in a resource set for the short TTI, occupied by the control region of each short TTI are notified through higher-layer signaling, the resource set for the control region of the short TTI is allocated according to the time length of the short TTI. For example, when the frequency resource is notified via the higher-layer signaling, the control region of the short TTI with the length of two OFDM symbols in a sub-frame occupies the first M RBs in the frequency domain in the short TTI, and a control region of a short TTI with the length of seven OFDM symbols in a sub-frame occupies the first N RBs in the frequency domain in the short TTI, where both M and N are positive integers more than or equal to 1.

The base station determines available resources in an allocated sPDCCH resource set, and maps control information for scheduling data transmission in the short TTI onto a specific resource in the sPDCCH resource set. For example, there are three RBs in a downlink control region in the short TTI, so a control channel of a short TTI can be mapped to a resource in the downlink control region as illustrated in Fig.7(a), Fig.7(b), and Fig.7(c). As illustrated in Fig.7(b), for example, bit information to be carried in the sPDCCHs is concatenated, scrambled, modulated, layer-mapped, and pre-coded into information symbols, the information symbols are divided into quadruples, and the quadruples are interleaved. The interleaved quadruples are mapped onto the resources in the control region of the short TTI. For example, there is only one sCCE in the control region, and the sCCE includes nine sREGs, so the sREGs in the sCCE can be mapped in the control region in the short TTI as illustrated in Fig.7(b); or the sPDCCHs can be mapped in the resource set in the control region in the same way as EPDCCHs, and in this way, the sCCE includes a plurality of sREGs as illustrated in Fig.7(a); or the resource is mapped in the unit of RB, downlink control information is mapped to the RBs occupied by the control channel in a firstly frequency-domain and then time-domain or firstly time-domain and then frequency-domain (only frequency-domain when the control region of the short TTI occupies only one OFDM) order as illustrated in Fig.7(a) and Fig.7(c). The UE detects blindly its sPDCCH in a search space allocated for the UE in the resource set for the control region. The UE obtains its scheduling information as a result of de-interleaving, demodulation, and other operations upon reception of the sPDCCH of the UE using an RNTI.

Furthermore this embodiment illustrates a possible position example that the resource set for the control region of the short TTI is located in the frequency domain in the short TTI, but the control region of short TTI can alternatively be located in other position in the frequency domain in the short TTI, or can occupy other number OFDM symbols. The resource set for the control region of the short TTI may alternatively be notified via the higher-layer signaling as per RB group.

Fourth Embodiment

In this embodiment, for example, the length of a short TTI in the time domain is two OFDM symbols, and a legacy control region in an LTE system occupies two OFDM symbols, so there are six short TTIs in a sub-frame, which are sTTI0, sTTI1, sTTI2, sTTI3, sTTI4, and sTTI5 respectively. For example, a control region of each short TTI is located in the first OFDM symbol. A base station carries some number of information bits in a common search space of the legacy control region in the LTE system to indicate the position, occupied by the control regions of all the short TTIs in the sub-frame, in the frequency domain in the short TTIs. For example, RBs, occupied by the control regions of the short TTIs in the sub-frame, in the frequency domain in the short TTIs are indicated. In this embodiment, the information is sub-frame-specific, that is, frequency information of the control channels of all short TTIs in the sub-frame is notified via the information as illustrated in Fig.6(a) and Fig.6(b).

The base station determines available resources in an allocated sPDCCH resource set, and maps control information for scheduling data transmission in the short TTI onto a specific resource in the sPDCCH resource set. For example, there are three RBs in a downlink control region of the short TTI, so a control channel of a short TTI can be mapped to a resource in the downlink control region as illustrated in Fig.7(a), Fig.7(b), and Fig.7(c). As illustrated in Fig.7(b), for example, bit information to be carried in the sPDCCHs is concatenated, scrambled, modulated, layer-mapped, and pre-coded into information symbols, the information symbols are divided into quadruples, and the quadruples are interleaved. The interleaved quadruples are mapped onto the resources in the control region of the short TTI. For example, there is only one sCCE in the control region, and the sCCE includes 9 sREGs, so the sREGs in the sCCE can be mapped in the control region of the short TTI as illustrated in Fig.7(b); or the sPDCCHs can be mapped in the resource set in the control region in the same way as EPDCCHs, and in this way, the sCCE includes a plurality of sREGs as illustrated in Fig.7(a); or the resource s mapped in the unit of RB, the downlink control information is mapped to the RBs occupied by the control channel in a firstly frequency-domain and then time-domain or firstly time-domain and then frequency-domain (only frequency-domain when the control region of the short TTI occupies only one OFDM) order as illustrated in Fig.7(a) and Fig.7(c). The UE detects blindly its sPDCCH in a search space allocated for the UE in the resource set for the control region. The UE obtains its scheduling information as a result of de-interleaving, demodulation, and other operations upon reception of the sPDCCH of the UE using an RNTI. Furthermore Fig.6 illustrates a possible position example that the resource set for the control region of the short TTI is located in the frequency domain in the short TTI, but the control region of the short TTI can alternatively be located in other position in the frequency domain in the short TTI, or can occupy more than one OFDM symbol. The resource set for the control region of the short TTI may alternatively be notified via the higher-layer signaling as per RB group.

Fifth Embodiment

In this embodiment, for example, the length of a short TTI in the time domain is two OFDM symbols, and a legacy control region in an LTE system occupies two OFDM symbols, so there are six short TTIs in a sub-frame, which are sTTI0, sTTI1, sTTI2, sTTI3, sTTI4, and sTTI5 respectively. For example, a control region of each short TTI is located in the first OFDM symbol. A base station carries some number of information bits in a common search space of the legacy control region in the LTE system to indicate the positions, occupied by the control regions of all the short TTIs in the sub-frame, in a resource set for the short TTIs. For example, RBs, occupied by the control regions of the short TTIs in the sub-frame, in the frequency domain in the short TTIs are indicated. In this embodiment, the information is sub-frame-specific, that is, frequency information of the control channel of each short TTI in the sub-frame is notified via the information. The positions of the frequency resources, occupied by the control regions in the different short TTIs, may or may not be the same as illustrated in Fig.7(a), Fig.7(b), and Fig.7(c).

The base station determines available resources in an allocated sPDCCH resource set, and maps control information for scheduling data transmission in the short TTI onto a specific resource in the sPDCCH resource set. For example, there are three RBs in a downlink control region of the short TTI, so a control channel of a short TTI can be mapped to a resource in the downlink control region as illustrated in Fig.7(a), Fig.7(b), and Fig.7(c). As illustrated in Fig.7(b), for example, bit information to be carried in the sPDCCHs is concatenated, scrambled, modulated, layer-mapped, and pre-coded into information symbols, the information symbols are divided into quadruples, and the quadruples are interleaved. The interleaved quadruples are mapped onto the resources in the control region of the short TTI. For example, there is only one sCCE in the control region, and the sCCE includes 9 sREGs, so the sREGs in the sCCE can be mapped in the control region of the short TTI as illustrated in Fig.7(b); or the sPDCCHs can be mapped in the resource set in the control region in the same way as EPDCCHs, and in this way, the sCCE includes a plurality of sREGs as illustrated in Fig.7(a); or the resource is mapped in the unit of RB, the downlink control information is mapped to the RBs occupied by the control channel in a firstly frequency-domain and then time-domain or firstly time-domain and then frequency-domain (only frequency-domain when the control region of the short TTI occupies only one OFDM) order as illustrated in Fig.7(a) and Fig.7(c). The UE detects blindly its sPDCCH in a search space allocated for the UE in the resource set for the control region. The UE obtains its scheduling information as a result of de-interleaving, demodulation, and other operations upon reception of the sPDCCH of the UE using an RNTI. Furthermore Fig.6(a) and

Fig.6(b) illustrate a possible position example that the resource set for the control region of the short TTI is located in the frequency domain in the short TTI, but the control region of the short TTI can alternatively be located in other position in the frequency domain in the short TTI, or can occupy more than one OFDM symbol. The resource set for the control region of the short TTI may alternatively be notified via the higher-layer signaling as per RB group.

Sixth Embodiment

In this embodiment, frequency resources occupied by a control region of a short TTI are distributed at fixed positions in the frequency domain in the short TTI in a predefined manner, and these positions may be consecutive or may be discrete, and will not be indicated explicitly. For example, the length of a short TTI in the time domain is two OFDM symbols, and a legacy control region in an LTE system occupies two OFDM symbols, so there are six short TTIs in a sub-frame, which are sTTI0, sTTI1, sTTI2, sTTI3, sTTI4, and sTTI5 respectively. For example, a control region of each short TTI is located in the first OFDM symbol. Fig.6(a) and Fig.6(b), and Fig.8(a) and Fig.8(b) illustrate schematic diagrams of frequency positions, occupied by the control regions of the short TTIs. A control channel of a short TTI can be mapped to a resource in a resource set for the control regions in the short TTIs as described in the first to fifth embodiments, so a repeated description thereof will be omitted here.

Referring to Fig.9, a first apparatus for determining a channel resource at the user equipment side according to an embodiment of the invention includes the following units.

A first determining unit 11 is configured to determine a resource set for a control region of a short Transmission Time Interval (TTI).

A second determining unit 12 is configured to determine a set of resources for a control channel of the user equipment in the resource set.

Optionally the first determining unit is configured: to obtain the resource set for the control region of the short TTI through higher-layer signaling; or to obtain the resource set for the control region of the short TTI according to information carried in a legacy control region; or to obtain the resource set for the control region of the short TTI as agreed on in advance with the network side.

Optionally the second determining unit is further configured: to detect blindly the control channel of the user equipment in the set of resources for the control channel of the user equipment.

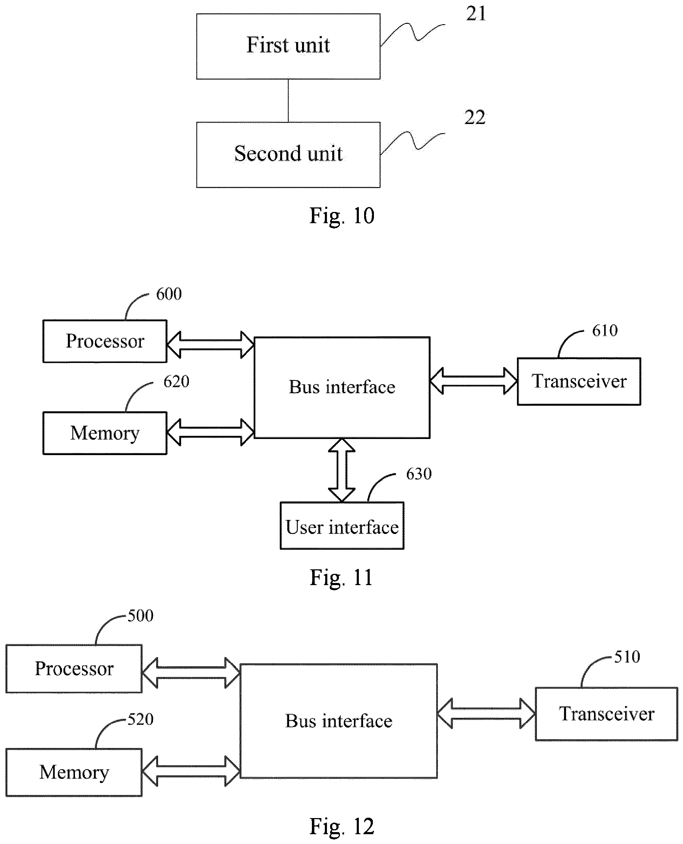

Referring to Fig.10, a first apparatus for mapping to a resource at the base station side according to an embodiment of the invention includes the following units.

A first unit 21 is configured to determine a resource set for a control region of a short Transmission Time Interval (TTI) of a user equipment.

A second unit 22 is configured to map a control channel of the short TTI of the user equipment to a set of resources within the resource set.

Optionally the resource set is a resource set agreed on in advance with the user equipment.

Optionally the first unit is further configured to notify the user equipment of the resource set.

Optionally the first unit is configured: to notify the user equipment of the resource set for the control region of the short TTI of the user equipment through higher-layer signaling; or, notify the user equipment of the resource set for the control region of the short TTI of the user equipment in a sub-frame through information carried in the legacy control region in the same sub-frame.

Optionally when the resource set for the control region of the short TTI of the user equipment is notified to the user equipment through the higher-layer signaling, the first unit is configured to notify the same resource set for control regions of all short transmission time intervals in a sub-frame through the higher-layer signaling; or the first unit is configured to notify the resource set for the control region of each short TTI in the sub-frame through the higher-layer signaling separately.

Optionally when the first unit is configured to notify the user equipment of the resource set for the control region of the short TTI of the user equipment in a sub-frame through the information carried in the legacy control region in the same sub-frame, the resource set for control regions across all the short TTIs in the sub-frame is uniform and notified by the information; or the first unit is configured to notify the resource set for the control region of each short TTI in the sub-frame respectively through the information in the legacy control region in the same sub-frame.

Optionally the resource set for the control region of the short TTI includes N resource block groups or P resource blocks in the frequency domain in the short TTI, and each resource block group includes M resource blocks, where N, P, and M are positive integers.

Optionally the N resource block groups are consecutive or discrete, or the P resource blocks are consecutive or discrete.

Referring to Fig.11, a second apparatus for determining a channel resource at the UE side according to an embodiment of the invention includes the followings.

A processor 600 is configured to read and execute program in a memory 620: to determine a resource set for a control region in a short Transmission Time Interval (TTI); and to determine a set of resources for a control channel of the user equipment in the resource set.

A transceiver 610 is configured to receive and transmit data under the control of the processor 600.

Optionally the processor 600 is configured: to receive high-layer signaling through the transceiver 610, and to obtain the resource set for the control region of the short TTI through the higher-layer signaling; or to receive a legacy control region through the transceiver 610, and to obtain the resource set for the control region of the short TTI according to information carried in the legacy control region; or to obtain the resource set for the control region of the short TTI as agreed on in advance with the network side.

Optionally the processor 600 is further configured: to detect blindly the control channel of the user equipment in the set of resources for the control channel of the user equipment.

The transceiver 610 is configured to receive and transmit data under the control of the processor 600.

Here in Fig.11, the bus architecture can include any number of interconnecting buses and bridges to particularly link together various circuits including one or more processors represented by the processor 600, and one or more memories represented by the memory 620. The bus architecture can further link together various other circuits, e.g., a peripheral device, a manostat, a power management circuit, etc., all of which are well known in the art, so a further description thereof will be omitted in this context. The bus interface serves as an interface. The transceiver 610 can be a number of elements, e.g., a transmitter and a receiver, which are units for communication with various other devices over a transmission medium. For different user equipments, the user interface 630 can also be an interface via which devices are connected internally and externally as needed, and the connected devices include but will not be limited to a keypad, a display, a speaker, a microphone, a joystick, etc.

The processor 600 is responsible for managing the bus architecture and performing normal processes, and the memory 620 can store data for use by the processor 600 in performing the operations.

Optionally the processor 600 can be a Central Processing Unit (CPU), an Application Specific Integrated Circuit (ASIC), a Field Programmable Gate Array (FPGA), or a Complex Programmable Logic Device (CPLD).

Referring to Fig.12, a second apparatus for mapping to a resource at the base station side according to an embodiment of the invention includes the followings.

A processor 500 is configured to read and execute program in a memory 520: to determine a resource set for a control region of a short Transmission Time Interval (TTI) of a user equipment; and to map a control channel of the short TTI of the user equipment to a set of resources within the resource set.

The transceiver 510 is configured to receive and transmit data under the control of the processor 500.

Optionally the resource set is a resource set agreed on in advance with the user equipment.

Optionally the processor 500 is further configured to notify the user equipment of the resource set through the transceiver 510.

Optionally the processor 500 is configured: to control the transceiver 510 to notify the user equipment of the resource set for the control region of the short TTI of the user equipment through higher-layer signaling; or to control the transceiver 510 to notify the user equipment of the resource set for the control region of the short TTI of the user equipment in a sub-frame through information carried in the legacy control region in the same sub-frame.

Optionally when the processor 500 configured to control the transceiver 510 to notify the user equipment of the resource set for the control region of the short TTI of the user equipment through the higher-layer signaling, the processor is configured to notify the same resource set for control regions of all the short TTIs in a sub-frame through the high-layer signaling; or the processor is configured to notify the resource set for the control region of each short TTI in a sub-frame through the higher-layer signaling separately.

Optionally when the processor 500 is configured to control the transceiver 510 to notify the user equipment of the resource set for the control region of the short TTI of the user equipment in a sub-frame through the information carried in the legacy control region in the same sub-frame, the resource set for control regions across all the short TTIs in the sub-frame is uniform and notified by the information; or to notify the resource set for control region of each short TTI in the sub-frame respectively through the information in the legacy control region in the same-subframe.

Optionally the resource set for a control region in a short TTI includes N resource block groups or P resource blocks in the frequency domain in the short TTI, and each resource block group includes M resource blocks, where N, P, and M are positive integers.

Optionally the N resource block groups are consecutive or discrete, or the P resource blocks are consecutive or discrete.

Here in Fig.12, the bus architecture can include any number of interconnecting buses and bridges to particularly link together various circuits including one or more processors represented by the processor 500, and one or more memories represented by the memory 520. The bus architecture can further link together various other circuits, e.g., a peripheral device, a manostat, a power management circuit, etc., all of which are well known in the art, so a further description thereof will be omitted in this context. The bus interface serves as an interface. The transceiver 510 can be a number of elements, e.g., a transmitter and a receiver, which are units for communication with various other devices over a transmission medium. The processor 500 is responsible for managing the bus architecture and performing normal processes, and the memory 520 can store data for use by the processor 500 in performing the operations.

The processor 500 can be a CPU, an ASIC, an FPGA, or a CPLD.

In summary, in the embodiments of the invention, the UE is notified of frequency resources occupied by a control region of a short TTI of the UE via higher-layer signaling, the UE is notified of frequency resources occupied by a control region of a short TTI of the UE by information bits transmitted in a legacy control region, or a control region of a short TTI is distributed over fixed frequency resources, and determined in a predefined manner, so that the user equipment can determine the resource set for a control region of a short TTI, determine the the resource position for a control channel of the user equipment in the resource set, and subsequently detects the control channel of the user equipment in the resource position for the control channel of the user equipment in the resource set.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

**Claims**

**1.** A method for determining a channel resource, applied to a Long Term Evolution, LTE, system, the method comprising:

determining (S101), by a user equipment, a resource set for a control region of a short transmission time interval; and

determining (S102), by the user equipment, a set of resources for a control channel of the user equipment in the resource set;

**characterized in that**, determining, by the user equipment, the resource set for the control region of the short transmission time interval comprises:

obtaining, by the user equipment, the resource set for the control region of the short transmission time interval of the user equipment through higher-layer signaling, wherein the resource set for the control region of each short transmission time interval in a sub-frame is obtained through the high-layer signaling separately and the position, in the frequency domain, of the control region of each short transmission time interval in the sub-frame is different;

or

obtaining, by the user equipment, the resource set for the control region of the short transmission time interval according to bit information carried in a legacy control region, wherein the resource set for the control region of each short transmission time interval in a sub-frame is obtained through bit information, carried in the legacy control region located in the sub-frame, separately and the position, in the frequency domain, of the control region of each short transmission time interval in the sub-frame is different.

2. The method according to claim 1, further comprises:
detecting, by the user equipment, blindly the control channel of the user equipment in the set of resources for the control channel of the user equipment.

3. A method for mapping to a resource, applied to a Long Term Evolution, LTE, system, the method comprising:

determining (S201), by a base station, a resource set for a control region of a short transmission time interval of a user equipment;

mapping (S202), by the base station, a control channel of the short transmission time interval of the user equipment to a set of resources within the resource set; and

notifying, by the base station, the user equipment of the resource set;

**characterized in that**, notifying, by the base station, the user equipment of the resource set comprises:

notifying, by the base station, the user equipment of the resource set for the control region of the short transmission time interval of the user equipment through higher-layer signaling, wherein the resource set for the control region of each short transmission time interval in a sub-frame is notified through the high-layer signaling separately and the position, in the frequency domain, of the control region of each short transmission time interval in the sub-frame is different;

or

notifying, by the base station, the user equipment of the resource set for the control region of the short transmission time interval of the user equipment through bit information carried in the legacy control region, wherein the resource set for the control region of each short transmission time interval in a sub-frame is notified through bit information, carried in the legacy control region located in the sub-frame, separately and the position, in the frequency domain, of the control region of each short transmission time interval in the sub-frame is different.

4. The method according to claim 3, wherein the resource set for the control region of the short transmission time interval comprises N resource block groups or P resource blocks in a frequency domain in the short transmission time interval, the N resource block groups are consecutive or discrete in the frequency domain, or the P resource blocks are consecutive or discrete in the frequency domain, and each resource block group comprises M resource blocks, wherein N, P, and M are positive integers.

5. An apparatus for determining a channel resource, applied to a Long Term Evolution, LTE, system, the apparatus comprising:

a first determining unit (11) configured to determine a resource set for a control region of a short transmission time interval; and

a second determining unit (12) configured to determine a set of resources for a control channel of a user equipment in the resource set;

**characterized in that**, the first determining unit is configured:

to obtain the resource set for the control region of the short transmission time interval of the user equipment through higher-layer signaling, wherein the resource set for the control region of each short transmission interval in a sub-frame is obtained through the high-layer signaling separately and the position, in the frequency domain, of the control region of each short transmission time interval in the sub-frame is different; or

to obtain the resource set for the control region of the short transmission time interval according to bit information carried in a legacy control region, wherein the resource set for the control region of each short transmission time interval in a sub-frame is obtained through bit information, carried in the legacy control region located in the sub-frame, separately and the position, in the frequency domain, of the control region of each short transmission time interval in the sub-frame is different.

6. The apparatus according to claim 5, wherein the second determining unit is further configured: to detect blindly the control channel of the user equipment in the set of resources for the control channel of the user equipment.

7. An apparatus for mapping to a resource, applied to a Long Term Evolution, LTE, system, the apparatus comprising:

a first unit (21) configured to determine a resource set for a control region of a short transmission time interval of a user equipment; and
a second unit (22) configured to map a control channel of the short transmission time interval of the user equipment to a set of resources within the resource set;
**characterized in that**, the first unit is further configured to notify the user equipment of the resource set;
wherein the first unit is configured:

to notify the user equipment of the resource set for the control region of the short transmission time interval of the user equipment through higher-layer signaling, wherein the resource set for the control region of each short transmission time interval in a sub-frame is notified through the high-layer signaling separately and the position, in the frequency domain, of the control region of each short transmission time interval in the sub-frame is different;
or

to notify the user equipment of the resource set for the control region of the short transmission time interval of the user equipment through bit information carried in the legacy control region, wherein the resource set for the control region of each short transmission time interval in a sub-frame is notified through bit information, carried in the legacy control region in the sub-frame, separately and the position, in the frequency domain, of the control region of each short transmission time interval in the sub-frame is different.

**Patentansprüche**

1. Verfahren zum Bestimmen einer Kanalressource unter Anwendung auf ein Long Term Evolution-, LTE-, System, wobei das Verfahren umfasst:

Bestimmen (S101) einer Ressourcenmenge für einen Steuerbereich eines kurzen Übertragungszeitintervalls durch ein Benutzergerät; und
Bestimmen (S102) einer Menge von Ressourcen durch das Benutzergerät für einen Steuerkanal des Benutzergeräts in der Ressourcenmenge;
**dadurch gekennzeichnet, dass** das Bestimmen der Ressourcenmenge für den Steuerbereich des kurzen Übertragungszeitintervalls durch das Benutzergerät umfasst:

Erhalten der Ressourcenmenge für den Steuerbereich des kurzen Übertragungszeitintervalls des Benutzergeräts durch das Benutzergerät mittels Signalisieren auf einer höheren Schicht, wobei die Ressourcenmenge für den Steuerbereich jedes kurzen Übertragungszeitintervalls in einem Teilrahmen durch Signalisieren auf einer hohen Schicht getrennt erhalten wird und die Position des Steuerbereichs jedes kurzen Übertragungszeitintervalls in der Frequenzdomäne im Teilrahmen unterschiedlich ist;
oder
Erhalten der Ressourcenmenge für den Steuerbereich des kurzen Übertragungszeitintervalls gemäß Bit-Informationen, die in einem Alt-Steuerbereich übertragen werden, durch das Benutzergerät, wobei die Ressourcenmenge für den Steuerbereich jedes kurzen Übertragungszeitintervalls in einem Teilrahmen mittels Bit-Informationen, die in dem Alt-Steuerbereich übertragen werden, der sich in dem Teilrahmen befindet, getrennt erhalten wird und die Position des Steuerbereichs jedes kurzen Übertragungszeitintervalls im Teilrahmen in der Frequenzdomäne unterschiedlich ist.

2. Verfahren gemäß Anspruch 1, ferner umfassend:
blindes Erkennen des Steuerkanals des Benutzergeräts durch das Benutzergerät in der Menge von Ressourcen für den Steuerkanal des Benutzergeräts.

3. Verfahren zum Abbilden auf eine Ressource unter Anwendung auf ein Long Term Evolution-, LTE-, System, wobei das Verfahren umfasst:

Bestimmen (S201) einer Ressourcenmenge für einen Steuerbereich eines kurzen Übertragungszeitintervalls eines Benutzergeräts durch eine Basisstation;
Abbilden (S202) eines Steuerkanals des kurzen Übertragungszeitintervalls des Benutzergeräts durch die Basisstation auf eine Menge von Ressourcen innerhalb der Ressourcenmenge; und
Informieren des Benutzergeräts durch die Basisstation über die Ressourcenmenge;
**dadurch gekennzeichnet, dass** das Informieren des Benutzergeräts durch die Basisstation über die Ressourcenmenge umfasst:

Informieren des Benutzergeräts durch die Basisstation über die Ressourcenmenge für den Steuerbereich des kurzen Übertragungszeitintervalls des Benutzergeräts Mittels Signalisieren auf einer höheren Schicht, wobei die Ressourcenmenge für den Steuerbereich jedes kurzen Übertragungszeitintervalls in einem Teilrahmen mittels Signalisieren auf einer hohen Schicht getrennt mitgeteilt wird und die Position des Steuerbereichs jedes kurzen Übertragungszeitintervalls in der Frequenzdomäne im Teilrahmen unterschiedlich ist; oder
Informieren des Benutzergeräts über die Ressourcenmenge für den Steuerbereich des kurzen Übertragungszeitintervalls des Benutzergeräts durch die Basisstation über Bit-Informationen, die im Alt-Steuerbereich übertragen werden, wobei die Ressourcenmenge für den Steuerbereich jedes kurzen Übertragungszeitintervalls in einem Teilrahmen mittels Bit-Informationen, die in dem im Teilrahmen befindlichen Alt-Steuerbereich übertragen werden, getrennt mitgeteilt wird und die Position des Steuerbereichs jedes kurzen Übertragungszeitintervalls in der Frequenzdomäne im Teilrahmen unterschiedlich ist.

4. Verfahren gemäß Anspruch 3, wobei die Ressourcenmenge für den Steuerbereich des kurzen Übertragungszeitintervalls N Ressourcenblockgruppen oder P Ressourcenblöcke in einer Frequenzdomäne in dem kurzen Übertragungszeitintervall umfasst, die N Ressourcenblockgruppen in der Frequenzdomäne aufeinanderfolgend oder diskret sind oder die P Ressourcenblöcke in der Frequenzdomäne aufeinanderfolgend oder diskret sind, und jede Ressourcenblockgruppe M Ressourcenblöcke umfasst, wobei N, P und M positive ganze Zahlen sind.

5. Vorrichtung zum Bestimmen einer Kanalressource unter Anwendung auf ein Long Term Evolution-, LTE-, System, wobei die Vorrichtung umfasst:

eine erste Bestimmungseinheit (11), die dazu ausgelegt ist, eine Ressourcenmenge für einen Steuerbereich eines kurzen Übertragungszeitintervalls zu bestimmen; und
eine zweite Bestimmungseinheit (12), die dazu ausgelegt ist, eine Menge von Ressourcen für einen Steuerkanal eines Benutzergeräts in der Ressourcenmenge zu bestimmen;
**dadurch gekennzeichnet, dass** die erste Bestimmungseinheit dazu ausgelegt ist:

die Ressourcenmenge für den Steuerbereich des kurzen Übertragungszeitintervalls des Benutzergeräts mittels Signalisieren auf einer höheren Schicht zu erhalten, wobei die Ressourcenmenge für den Steuerbereich jedes kurzen Übertragungsintervalls in einem Teilrahmen mittels Signalisieren auf einer hohen Schicht getrennt erhalten wird und die Position des Steuerbereichs jedes kurzen Übertragungszeitintervalls in der Frequenzdomäne im Teilrahmen unterschiedlich ist; oder
die Ressourcenmenge für den Steuerbereich des kurzen Übertragungszeitintervalls gemäß Bit-Informationen, die in einem Alt-Steuerbereich übertragen werden, zu erhalten, wobei die Ressourcenmenge für den Steuerbereich jedes kurzen Übertragungszeitintervalls in einem Teilrahmen mittels Bit-Informationen, die in dem Alt-Steuerbereich übertragen werden, der sich in dem Teilrahmen befindet, getrennt erhalten wird und die Position des Steuerbereichs jedes kurzen Übertragungszeitintervalls in der Frequenzdomäne im Teilrahmen unterschiedlich ist.

6. Vorrichtung gemäß Anspruch 5, wobei die zweite Bestimmungseinheit ferner dazu ausgelegt ist, den Steuerkanal des Benutzergeräts in der Menge von Ressourcen für den Steuerkanal des Benutzergeräts blind zu erkennen.

7. Vorrichtung zum Abbilden auf eine Ressource unter Anwendung auf ein Long Term Evolution-, LTE-, System, wobei die Vorrichtung umfasst:

eine erste Einheit (21), die dazu ausgelegt ist, eine Ressourcenmenge für einen Steuerbereich eines kurzen Übertragungszeitintervalls eines Benutzergeräts zu bestimmen; und
eine zweite Einheit (22), die dazu ausgelegt ist, einen Steuerkanal des kurzen Übertragungszeitintervalls des Benutzergeräts auf eine Menge von Ressourcen innerhalb der Ressourcenmenge abzubilden;
**dadurch gekennzeichnet, dass** die erste Einheit ferner dazu ausgelegt ist, das Benutzergerät über die Ressourcenmenge zu informieren;
wobei die erste Einheit dazu ausgelegt ist:

das Benutzergerät über die Ressourcenmenge für den Steuerbereich des kurzen Übertragungszeitintervalls des Benutzergeräts durch Signalisieren auf einer höheren Schicht zu informieren, wobei die Ressourcenmenge für den Steuerbereich jedes kurzen Übertragungszeitintervalls in einem Teilrahmen mittels Signalisieren auf einer hohen Schicht getrennt mitgeteilt wird und die Position des Steuerbereichs jedes kurzen Übertragungszeitintervalls in der Frequenzdomäne im Teilrahmen unterschiedlich ist;
oder
das Benutzergerät über die Ressourcenmenge für den Steuerbereich des kurzen Übertragungszeitintervalls des Benutzergeräts durch Bit-Informationen, die im Alt-Steuerbereich übertragen werden, zu informieren, wobei die Ressourcenmenge für den Steuerbereich jedes kurzen Übertragungszeitintervalls in einem Teilrahmen mittels Bit-Informationen, die im Alt-Steuerbereich im Teilrahmen übertragen werden, getrennt mitgeteilt wird und die Position des Steuerbereichs jedes kurzen Übertragungszeitintervalls in der Frequenzdomäne im Teilrahmen unterschiedlich ist.

## Revendications

1. Procédé de détermination d'une ressource de canal, appliqué à un système de type Évolution à Long Terme, LTE, le procédé comprenant :

la détermination (S101), par un équipement utilisateur, d'un ensemble de ressources pour une région de commande d'un intervalle de temps de transmission court ; et
la détermination (S102), par l'équipement utilisateur, d'un ensemble de ressources pour un canal de commande de l'équipement utilisateur dans l'ensemble de ressources ;
**caractérisé en ce que** la détermination, par l'équipement utilisateur, de l'ensemble de ressources pour la région de commande de l'intervalle de temps de transmission court comprend :

l'obtention, par l'équipement utilisateur, de l'ensemble de ressources pour la région de commande de l'intervalle de temps de transmission court de l'équipement utilisateur au moyen d'une signalisation de couche supérieure, l'ensemble de ressources pour la région de commande de chaque intervalle de temps de transmission court dans une sous-trame étant obtenu séparément au moyen de la signalisation de couche élevée et la position, dans le domaine fréquentiel, de la région de commande de chaque intervalle de temps de transmission court dans la sous-trame étant différente ;
ou
l'obtention, par l'équipement utilisateur, de l'ensemble de ressources pour la région de commande de l'intervalle de temps de transmission court selon des informations sur des bits véhiculées dans une région de commande héritée, l'ensemble de ressources pour la région de commande de chaque intervalle de temps de transmission court dans une sous-trame étant obtenu séparément au moyen d'informations sur des bits véhiculées dans la région de commande héritée située dans la sous-trame et la position, dans le domaine fréquentiel, de la région de commande de chaque intervalle de temps de transmission court dans la sous-trame étant différente.

**2.** Procédé selon la revendication 1, comprenant en outre :
la détection aveugle, par l'équipement utilisateur, du canal de commande de l'équipement utilisateur dans l'ensemble de ressources pour le canal de commande de l'équipement utilisateur.

**3.** Procédé de mappage sur une ressource, appliqué à un système de type Évolution à Long Terme, LTE, le procédé comprenant :

la détermination (S201), par une station de base, d'un ensemble de ressources pour une région de commande d'un intervalle de temps de transmission court d'un équipement utilisateur ;
le mappage (S202), par la station de base, d'un canal de commande de l'intervalle de temps de transmission court de l'équipement utilisateur sur un ensemble de ressources au sein de l'ensemble de ressources ; et
la notification, par la station de base, à l'équipement utilisateur, de l'ensemble de ressources ;
**caractérisé en ce que** la notification, par la station de base, à l'équipement utilisateur, de l'ensemble de ressources comprend :

la notification, par la station de base, à l'équipement utilisateur, de l'ensemble de ressources pour la région de commande de l'intervalle de temps de transmission court de l'équipement utilisateur au moyen d'une signalisation de couche supérieure, l'ensemble de ressources pour la région de commande de chaque intervalle de temps de transmission court dans une sous-trame étant notifié séparément au moyen de la signalisation de couche élevée et la position, dans le domaine fréquentiel, de la région de commande de chaque intervalle de temps de transmission court dans la sous-trame étant différente ;
ou
la notification, par la station de base, à l'équipement utilisateur, de l'ensemble de ressources pour la région de commande de l'intervalle de temps de transmission court de l'équipement utilisateur au moyen d'informations sur des bits véhiculées dans la région de commande héritée, l'ensemble de ressources pour la région de commande de chaque intervalle de temps de transmission court dans une sous-trame étant notifié séparément au moyen d'informations sur des bits véhiculées dans la région de commande héritée située dans la sous-trame et la position, dans le domaine fréquentiel, de la région de commande de chaque intervalle de temps de transmission dans la sous-trame étant différente.

**4.** Procédé selon la revendication 3, dans lequel l'ensemble de ressources pour la région de commande de l'intervalle de temps de transmission court comprend N groupes de blocs de ressources ou P blocs de ressources dans un domaine fréquentiel dans l'intervalle de temps de transmission court, les N groupes de blocs de ressources étant consécutifs ou discrets dans le domaine fréquentiel ou les P blocs de ressources étant consécutifs ou discrets dans le domaine fréquentiel, et chaque groupe de blocs de ressources comprenant M blocs de ressources, N, P et M étant des entiers positifs.

**5.** Appareil permettant la détermination d'une ressource de canal, appliqué à un système de type Évolution à Long Terme, LTE, l'appareil comprenant :

une première unité de détermination (11) configurée pour déterminer un ensemble de ressources pour une région de commande d'un intervalle de temps de transmission court ; et
une deuxième unité de détermination (12) configurée pour déterminer un ensemble de ressources pour un canal de commande d'un équipement utilisateur dans l'ensemble de ressources ;
**caractérisé en ce que** la première unité de détermination est configurée :

pour obtenir l'ensemble de ressources pour la région de commande de l'intervalle de temps de transmission court de l'équipement utilisateur au moyen d'une signalisation de couche supérieure, l'ensemble de ressources pour la région de commande de chaque intervalle de temps de transmission court dans une sous-trame étant obtenu séparément au moyen de la signalisation de couche élevée et la position, dans le domaine fréquentiel, de la région de commande de chaque intervalle de temps de transmission dans la sous-trame court étant différente ;
ou
pour obtenir l'ensemble de ressources pour la région de commande de l'intervalle de temps de transmission court selon des informations sur des bits véhiculées dans une région de commande héritée, l'ensemble de ressources pour la région de commande de chaque intervalle de temps de transmission court dans une sous-trame étant obtenu séparément au moyen d'informations sur des bits véhiculées dans la région de commande héritée située dans la sous-trame et la position, dans le domaine fréquentiel, de la région de commande de chaque intervalle de temps de transmission court dans la sous-trame étant différente.

6. Appareil selon la revendication 5, dans lequel la deuxième unité de détermination est configurée en outre : pour détecter aveuglement le canal de commande de l'équipement utilisateur dans l'ensemble de ressources pour le canal de commande de l'équipement utilisateur.

7. Appareil permettant le mappage sur une ressource, appliqué à un système de type Évolution à Long Terme, LTE, l'appareil comprenant :

une première unité (21) configurée pour déterminer un ensemble de ressources pour une région de commande d'un intervalle de temps de transmission court d'un équipement utilisateur ; et
une deuxième unité (22) configurée pour mapper un canal de commande de l'intervalle de temps de transmission court de l'équipement utilisateur sur un ensemble de ressources au sein de l'ensemble de ressources ;
**caractérisé en ce que** la première unité est configurée en outre pour notifier, à l'équipement utilisateur, l'ensemble de ressources ;
la première unité étant configurée :

pour notifier, à l'équipement utilisateur, l'ensemble de ressources pour la région de commande de l'intervalle de temps de transmission court de l'équipement utilisateur au moyen d'une signalisation de couche supérieure, l'ensemble de ressources pour la région de commande de chaque intervalle de temps de transmission court dans une sous-trame étant notifié séparément au moyen de la signalisation de couche élevée et la position, dans le domaine fréquentiel, de la région de commande de chaque intervalle de temps de transmission court dans la sous-trame étant différente ;
ou
pour notifier, à l'équipement utilisateur, l'ensemble de ressources pour la région de commande de l'intervalle de temps de transmission court de l'équipement utilisateur au moyen d'informations sur des bits véhiculées dans la région de commande héritée, l'ensemble de ressources pour la région de commande de chaque intervalle de temps de transmission court dans une sous-trame étant notifié séparément au moyen d'informations sur des bits véhiculées dans la région de commande héritée dans la sous-trame et la position, dans le domaine fréquentiel, de la région de commande de chaque intervalle de temps de transmission court dans la sous-trame étant différente.

One radio frame, $T_f = 307200T_s = 10$ ms

One timeslot, $T_{slot} = 15360T_s = 0.5$ ms

| #0 | #1 | #2 | #3 | ·········· | #18 | #19 |

One sub-frame

Fig. 1

One radio frame, $T_f = 307200T_s = 10$ ms

Half-frame, $153600T_s = 5$ ms

One timeslot
$T_{slot} = 15360T_s$

$30720T_s$

| Sub-frame #0 | | | | Sub-frame #2 | Sub-frame #3 | Sub-frame #4 | Sub-frame #5 | | | | Sub-frame #7 | Sub-frame #8 | Sub-frame #9 |

One sub-frame,
$30720T_s$

DwPTS    GP    UpPTS

DwPTS    GP    UpPTS

Fig. 2

One timeslot in downlink $T_{\text{slot}}$

$N_{\text{symb}}^{\text{DL}}$ OFDM symbol

$k = N_{\text{RB}}^{\text{DL}} N_{\text{sc}}^{\text{RB}} - 1$

Resource block
$N_{\text{symb}}^{\text{DL}} \times N_{\text{sc}}^{\text{RB}}$ resource elements

Resource element $(k, l)$

$N_{\text{RB}}^{\text{DL}} \times N_{\text{sc}}^{\text{RB}}$ sub-carriers

$N_{\text{sc}}^{\text{RB}}$ sub-carriers

$k = 0$

$l = 0$     $l = N_{\text{symb}}^{\text{DL}} - 1$

Fig. 3

A user equipment determines a resource
set for a control region of a short TTI

S101

The user equipment determines a set of
resources for a control channel of the user
equipment in the resource set

S102

Fig. 4

A base station determines a resource set
for a control region of a short TTI of a
user equipment

S201

The base station maps a control channel
of a short TTI of the user equipment to a
set of resources within the resource set

S202

Fig. 5

Fig. 6(a)

Fig. 6(b)

Fig. 7(a)

Fig. 7(b)

Fig. 7(c)

Fig. 8(a)

Fig. 8(b)

Fig. 9

Fig. 10

Fig. 11

Fig. 12

**EP 3 499 774 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NTT DOCOMO et al.** sPDCCH for shortened TTI. *3GPP DRAFT; R1-165209*